# FASCICULE DE BREVET EUROPEEN

(11) **EP 2 847 411 B1**
(45) Date de publication et mention de la délivrance du brevet: **28.10.2015**
(21) Numéro de dépôt: 13733284.7
(22) Date de dépôt: 01.07.2013
(51) Int. Cl.: E06B 9/40, E06B 9/68

(54) **Procédé de contrôle de la perméabilité à la lumière ou à l'air d'un écran extensible élastique et dispositif de contrôle adapté**
Verfahren zur Steuerung der Licht- oder Luftdurchlässigkeit eines elastischen, erweiterbaren Vorhangs und dafür geeignete Steuerungsvorrichtung
Method for controlling the light or air permeability of an elastic extensible screen and suitable control device

(30) Priorité: 01.07.2012 FR 1256302
(43) Date de publication de la demande: 18.03.2015
(73) Titulaire: Somfy SAS, 74300 Cluses (FR)
(72) Inventeur: CAVAREC, Pierre-Emmanuel, 74130 Mont Saxonnex (FR); LAGARDE, Eric, 74700 Sallanches (FR); NEUMAN, Serge, 74600 Seynod (FR)
(74) Mandataire: Bugnion Genève
(86) Numéro de dépôt international: PCT/EP2013/063781
(87) Numéro de publication internationale: WO 2014/005971

(56) Documents cités:
- EP-A2- 0 795 674
- DE-A1- 10 250 799
- DE-U1-202007 013 762
- US-A- 3 065 785
- US-A1- 2009 027 759

## Description

### DOMAINE TECHNIQUE DE L'INVENTION

L'invention se rapporte à la commande d'un écran. On parlera ici d'écran pour désigner de manière générique notamment des stores, marquises, toiles, rideaux vélums ou moustiquaires destinés à ce déployer et se rétracter, verticalement, horizontalement ou de façon oblique, notamment pour occulter des ouvertures dans les bâtiments ou protéger l'accès à de telles ouvertures, ou pour protéger du soleil ou de la pluie à l'extérieur, ou pour constituer des écrans de projection, de cloisonnement ou de décoration. L'invention se rapporte plus particulièrement à la commande d'un écran élastiquement extensible laissant plus ou moins passer la lumière et/ou l'air en fonction d'une traction à laquelle il est soumis.

### ETAT DE LA TECHNIQUE ANTERIEURE

On connaît des dispositifs d'écran motorisés permettant de faire varier la quantité de lumière et d'énergie entrant par une ouverture. Il s'agit essentiellement d'écrans vénitiens dont on fait varier l'orientation des lames. Il faut cependant constater que la quantité entrante suit des lois qu'il est très difficile, voire impossible, de modéliser correctement. Dès lors, il est nécessaire de recourir à un capteur de lumière et/ou de température pour chaque espace intérieur considéré et coupler ce ou ces capteur(s) avec l'automate qui orientera les lames jusqu'à obtenir la quantité de lumière naturelle requise. L'autre solution, plus rudimentaire, consiste à orienter les lames sur quelques positions prédéfinies et coupler cette orientation avec l'azimut du soleil. On obtient ainsi une bonne protection au rayonnement direct, mais une piètre qualité de l'ambiance lumineuse et du confort thermique.

On connaît par ailleurs des tissus élastiques extensibles qui laissent plus ou moins filtrer la lumière en fonction d'une déformation qu'on leur impose. En effet, les tissus sont fabriqués en croisant des fils de trame et de chaîne. Des interstices plus ou moins importants existent entre chaque de fils d'un même type et également entre fils de types différents. Ces interstices définissent une porosité qui laisse passer une lumière proportionnellement à l'aire de la surface des interstices. En utilisant des fils de trames et/ou des fils de chaîne présentant un entrelacement et une élasticité déterminée, il est possible de faire varier ces interstices. Le ratio de l'aire de la surface occupée par les interstices rapportée à l'aire de la surface totale de l'écran est appelé taux d'ouverture de l'écran. Dans le cas d'un tissu élastique extensible, ce taux d'ouverture varie avec la déformation élastique de l'écran.

Ce qui a été discuté ici à propos de tissus peut être transposé à d'autres écrans non tissés dont la structure présente des interstices ou des pores. Dans ce cas également, on peut définir un taux d'ouverture. Lorsque l'écran est élastiquement extensible, le taux d'ouverture est susceptible de varier, depuis une valeur minimale obtenue en l'absence d'effort de traction, jusqu'à une valeur maximale au-delà de laquelle des déformations irréversibles peuvent intervenir.

Comme on l'a indiqué, le taux d'ouverture est généralement utilisé pour caractériser l'opacité plus ou moins grande d'un écran tissé ou non. Le taux d'ouverture est exprimé en pourcentage. On peut obtenir des taux d'ouverture très faibles c'est-à-dire proches de 0% et en tout cas inférieur à 5% pour des écrans opaques, des taux d'ouverture de l'ordre de 15% à 20% pour des écrans classiques qui ont un effet de protection solaire. Au-delà, on n'obtient plus de protection solaire, on parle plus d'écran de décoration. Par exemple un taux d'ouverture de l'ordre de 40% correspond à un voilage. Le taux d'ouverture peut être toutefois également utilisé pour caractériser la capacité de l'écran à laisser passer de l'air.

Il a été proposé dans le document EP 0 795 674 A2 de mettre à profit un écran tissé ou non à taux d'ouverture variable pour occulter une ouverture d'un bâtiment. L'écran est fixé par une extrémité à un tube d'enroulement et par l'extrémité opposée à une barre de charge. Un mécanisme permet de dérouler ou enrouler l'écran autour du tube pour clore ou libérer l'ouverture. Ce mécanisme permet en outre de tendre l'écran extensible, ce qui a pour effet d'en accroître la translucidité, ou de le détendre, ce qui a l'effet contraire d'en augmenter l'opacité. Pour ce faire, le mécanisme permet de bloquer la position de la barre de charge, avant d'agir sur le rouleau pour tendre l'écran. L'écran est de préférence extensible dans une direction seulement. Il est de préférence tissé. Mais le mécanisme proposé n'est pas motorisé, ce qui signifie qu'il appartient à l'utilisateur de doser la traction à exercer pour obtenir la translucidité souhaitée. Un autre écran du même type est décrit dans le document US 3 065 785, avec les mêmes limitations.

Dans le document DE 20 2007 013762 U1 est décrit un écran de protection disposé sur une fenêtre d'un véhicule automobile. Ce dispositif comporte un écran enroulé autour d'un tube d'enroulement non motorisé. Le déploiement de l'écran est réalisé à l'aide d'une motorisation entraînant une tige se déplaçant en translation pour pousser une barre transversale disposée à une extrémité libre de l'écran.

### EXPOSE DE L'INVENTION

L'invention vise à remédier aux inconvénients de l'état de la technique et à proposer des moyens permettant de faire varier finement la perméabilité à la lumière et/ou à l'air d'un écran élastique extensible destiné à équiper une ouverture dans une paroi d'un bâtiment.

Suivant un premier aspect de l'invention, celle-ci a trait à un procédé de contrôle de la perméabilité à la lumière et/ou à l'air d'un écran élastique extensible disposé en regard d'une ouverture dans une paroi d'un bâtiment entre une zone à protéger et une zone externe, l'écran présentant une perméabilité variant avec un effort de traction exercé sur l'écran, caractérisé en ce qu'un mécanisme motorisé d'entraînement d'un tube d'enroulement de l'écran modifie un effort de traction sur l'écran en réponse à un signal de consigne.

En faisant appel à un mécanisme motorisé, on s'affranchit des difficultés rencontrées avec un ajustement manuel. Les efforts de traction de l'écran sont maintenus sans difficulté et avec précision de sorte que le taux d'ouverture des porosités de l'écran est parfaitement maîtrisé.

La consigne peut être fournie par l'utilisateur actionnant une commande électrique. De préférence, la commande du mécanisme motorisé est toutefois automatisée. Pour ce faire, et suivant un mode de réalisation préféré, le signal de consigne est fonction d'un ou plusieurs signaux en provenance d'un ou plusieurs capteurs.

Pour une application à la gestion de la luminosité ou du rayonnement solaire dans la zone à protéger, le ou les capteurs peuvent comprendre au moins un capteur détectant l'intensité lumineuse dans la zone à protéger et/ou dans la zone externe. On peut disposer le capteur à distance de l'écran dans la zone observée, ou bien sur l'écran. Dans ce dernier cas, le capteur peut être disposé du côté de la zone à protéger et orienté de manière à détecter la luminosité dans la zone à protéger. Il peut être également accolé à l'écran du côté de la zone à protéger, mais orienté de manière à détecter la lumière traversant l'écran, donnant ainsi une mesure locale directe du taux d'ouverture. Dans la mesure où l'écran élastique se déforme uniformément, cette mesure locale est représentative de l'ensemble de l'écran.

Le signal de consigne peut également être fonction d'un ou plusieurs signaux en provenance d'un ou plusieurs capteurs thermiques disposés dans la zone à protéger et/ou la zone externe.

On peut faire appel à un modèle numérique reliant le taux d'ouverture de l'écran à sa déformation (son allongement) et/ou l'effort de traction exercé. Ce modèle peut être par exemple un simple modèle linéaire empirique donnant une règle de proportionnalité entre taux d'ouverture et allongement, ou entre taux d'ouverture et effort de traction. Ainsi, le signal de consigne peut notamment être un signal proportionnel à un effort de traction à exercer sur l'écran, ou à une déformation à exercer sur l'écran. Des facteurs correctifs peuvent être apportés pour tenir compte du fluage et plus généralement du vieillissement du matériau constitutif de l'écran, qui peuvent notamment modifier sa raideur (la loi liant l'allongement ou la variation du taux d'ouverture des porosités à l'effort de traction) ou induire des déformations permanentes (modifiant la valeur du taux d'ouverture sans sollicitation). Le modèle peut être paramétré pour tenir compte des dimensions de l'écran ou d'autres paramètres. Le modèle peut le cas échéant être non linéaire, notamment si la plage de variation de taux d'ouverture est importante.

Les signaux de luminosité et/ou de température pourront être utilisés pour déterminer une valeur cible d'un taux d'ouverture souhaité, correspondant par l'intermédiaire du modèle à une consigne d'un effort de traction ou d'une déformation de l'écran. Le signal de consigne pourra ainsi être notamment proportionnel à une luminosité cible dans la zone à protéger. On pourra alors piloter le mécanisme motorisé de manière à obtenir l'effort de traction ou la déformation visée. Ce pilotage pourra de préférence être réalisé en boucle fermée en comparant la valeur de consigne avec un couple moteur ou une rotation d'un arbre moteur ou avec toute autre grandeur mesurée représentative de l'effort de traction ou de l'allongement.

Alternativement, on peut également utiliser comme rétroaction un signal lumineux en provenance de la zone à protéger.

Par ailleurs, le ou les capteurs peuvent comporter au moins un capteur de couple, notamment de couple moteur et/ou au moins un capteur de position d'un tube d'enroulement de l'écran.

La commande peut également faire appel à un capteur extensométrique associé à l'écran et déterminant l'allongement ou la déformation de l'écran.

Suivant un mode de réalisation, le tube d'enroulement (3) entraîné par le mécanisme d'entraînement permet d'enrouler et dérouler l'écran entre une position rétractée enroulée et une position déployée et le procédé comporte une étape préalable de déploiement motorisé de l'écran depuis la position rétractée jusqu'à la position déployée.

On peut faire en sorte que durant l'étape préalable de déploiement, l'écran présente une déformation maximale, ou une déformation prédéterminée suffisante pour augmenter significativement son taux d'ouverture par rapport à la valeur minimale sans déformation. Ce faisant, on permet de limiter le contraste introduit par le déploiement de l'écran.

Alternativement, on peut faire en sorte que durant l'étape préalable de déploiement, l'écran ne soit pas soumis à un effort de traction notable de sorte qu'il présente une déformation nulle ou minimale. Cette option offre l'avantage d'une simplicité de mise en oeuvre.

Suivant un autre aspect de l'invention, celle-ci a trait à un dispositif de contrôle de la perméabilité au travers d'une ouverture dans une paroi d'un bâtiment, entre une zone à protéger et une zone externe, comportant écran extensible présentant un perméabilité variant avec un effort de traction exercé sur l'écran, et un mécanisme motorisé d'entraînement d'un tube d'enroulement de l'écran pour ajuster un effort de traction sur l'écran en réponse à un signal de consigne et modifier ainsi la perméabilité de l'écran.

Le dispositif peut être à commande manuelle, mais il comporte de préférence un automatisme de commande du mécanisme motorisé pour générer le signal de consigne.

Préférentiellement, le dispositif comporte en outre au moins un capteur de luminosité relié à l'automatisme, pour mesurer une intensité lumineuse dans la zone à protéger et/ou dans la zone externe. Ce capteur peut être disposé à distance de l'écran dans la zone observée. Il peut également être intégré à l'écran et tourné vers la zone observée. Enfin, et de manière particulièrement avantageuse, le capteur de luminosité peut être accolé à l'écran dans la zone à protéger et orienté vers la zone externe de manière à détecter la lumière traversant l'écran. Naturellement, plusieurs capteurs de même type ou de types différents peuvent être utilisés. L'automatisme de commande comporte de préférence une loi programmée pour déterminer la valeur de consigne en fonction des signaux en provenance du ou des capteurs de luminosité, et le cas échéant d'autres capteurs.

Suivant un mode de réalisation, le tube d'enroulement est apte à enrouler et dérouler l'écran entre une position enroulée et une position déployée, le mécanisme motorisé étant entraîné par un actionneur rotatif qui peut être notamment un moteur électrique à courant continu ou un moteur sans balais, offrant l'avantage d'un pilotage précis à basse vitesse.

Suivant un mode de réalisation, le dispositif comporte en outre une barre de charge disposée à une extrémité libre de l'écran. La barre de charge peut présenter une masse telle que, suspendue à l'extrémité libre de l'écran, elle provoque un effort de traction prédéterminé suffisant pour provoquer lors du déploiement une déformation notable de l'écran et une augmentation substantielle du taux d'ouverture au-dessus de la valeur minimale. Le dispositif peut alors comporter une butée de support de la barre de charge en position déployée de l'écran, qui interdit le mouvement de la barre de charge au-delà de la position déployée et permet de moduler, en position déployée, l'effort de traction.

Le dispositif peut présenter un verrou pour verrouiller la barre de charge en position déployée.

Le tube d'enroulement peut être disposé dans la barre de charge.

Suivant un mode de réalisation préféré, le dispositif comporte deux tubes d'enroulement reliés à deux extrémités opposées de l'écran. Une sangle de liaison peut être utilisée pour relier l'un des deux tubes d'enroulement à l'une des desdites extrémités de l'écran.

### BREVE DESCRIPTION DES FIGURES

D'autres caractéristiques et avantages de l'invention ressortiront à la lecture de la description qui suit, en référence aux figures annexées, qui illustrent :
- les figures 1 a et 1 b, des vues schématique d'un écran à taux d'ouverture variable en fonction d'un effort de traction appliqué à l'écran ;
- les figures 2a à 2e, des vues schématiques d'un dispositif selon un premier mode de réalisation de l'invention, en position enroulée (figure 2a), déployée (figures 2c à 2e) et dans une position intermédiaire (figure 2b) ;
- les figures 3a à 3d, des vues schématiques d'un dispositif selon un deuxième mode de réalisation de l'invention ;
- les figures 4a et 4b, des vues schématiques d'un dispositif selon un troisième mode de réalisation de l'invention ;
- la figure 5, une vue schématique d'un dispositif selon un quatrième mode de réalisation de l'invention ;
- la figure 6, une vue schématique de certains composants d'un automatisme associé aux dispositifs précédents ;
- la figure 7, une vue schématique de l'automatisme ;
- la figure 8, une vue schématique d'un écran selon un cinquième mode de réalisation de l'invention ;
- la figure 9, une courbe caractéristique traction/allongement d'un écran, utilisée par l'automatisme de commande ;
- la figure 10, un algorithme d'apprentissage d'une commande des dispositifs précédents ;
- la figure 11, un algorithme de commande des dispositifs des figures 3a à 3d.

Pour plus de clarté, les éléments identiques seront repérés par des signes de référence identiques sur l'ensemble des figures.

### DESCRIPTION DETAILLEE D'UN MODE DE REALISATION

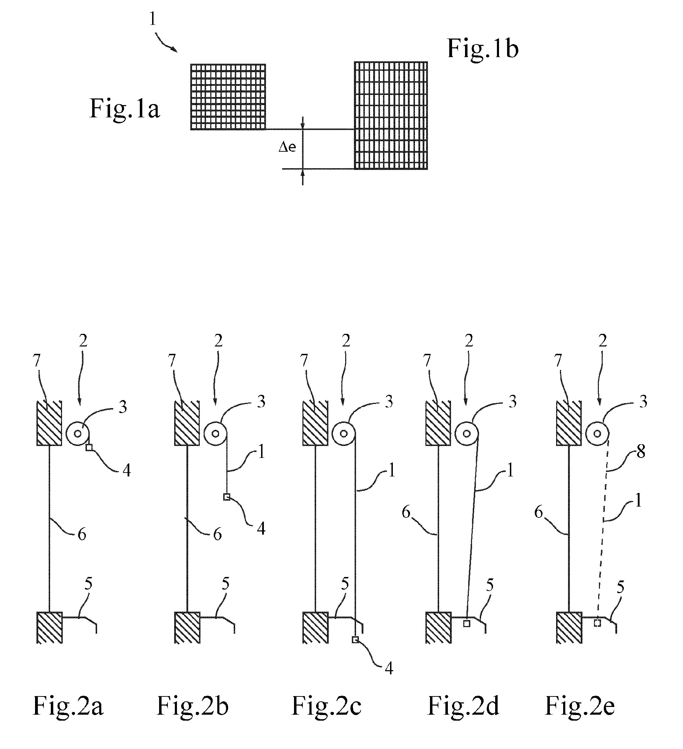

On a représenté sur les figures 1 a et 1 b un écran tissé de telle manière que lorsqu'on applique une traction dans une direction prédéterminée, par exemple parallèlement aux fils de chaîne ou parallèlement aux fils de trame, on modifie la géométrie des trous dans un sens (chaîne ou trame) tout en préservant la géométrie dans l'autre sens (chaîne ou trame). Comme illustrés aux figures 1 a et 1 b, on constate une élongation Δe qui se traduit au niveau du tissu par un écartement des mailles. Le taux d'ouverture est minimal en l'absence de déformation et augmente proportionnellement à la traction appliquée. La quantité de lumière et d'énergie (ou d'air) traversant l'écran sont fonction de ce taux d'ouverture et varient avec lui selon une loi propre à l'écran, qui peut être déterminée de façon empirique ou suivant un modèle. Le même comportement d'augmentation du taux d'ouverture avec un effort de traction peut par ailleurs être obtenu avec des écrans non tissés. De tels écrans sont connus, par exemple sous les marques Screenflex® de Hexcelscreen® ou Ombra DLS de Copaco®.

On a représenté sur les figures 2a à 2e un dispositif 2 de contrôle de la perméabilité d'un écran 1 du type précédent, suivant un premier mode de réalisation. L'écran 1 est initialement enroulé sur un tube d'enroulement 3 entraîné par un moteur, de préférence logé dans le tube d'enroulement 3. A une extrémité libre de l'écran est disposée une barre de charge 4. Le dispositif est disposé en regard d'une ouverture, en l'espèce une ouverture vitrée 6, dans une paroi 7 d'un bâtiment, la vitre 6 et la paroi 7 séparant une zone à protéger, où se trouve de dispositif, d'une zone externe. La zone à protéger peut être par exemple une pièce située à l'intérieur d'un bâtiment. La zone externe peut être une autre pièce ou une zone située à l'extérieur du bâtiment. Les deux zones peuvent être également être situées dans une même pièce. Le dispositif est complété par un verrou 5, disposé au niveau du seuil de l'ouverture vitrée 6. Ce verrou 5 coopère avec une extrémité de la barre de charge 4 qui dépasse du rebord latéral de l'écran 1.

Lors de son déploiement, illustré sur les figures 2b et 2c, l'écran présente un taux d'ouverture minimal, par exemple nul si la barre de charge 4 est suffisamment légère. Sur la figure 2d, le verrou vient bloquer la barre de charge 4 dans la position déployée. Le verrouillage peut être provoqué par exemple par une amorce de mouvement de remontée de la barre de charge, ou par un actionneur indépendant.

Une fois la barre de charge verrouillée, il devient possible de mettre l'écran en traction, en maintenant la barre de charge immobile grâce au verrou, et en entraînant simultanément le tube d'enroulement avec le moteur dans le sens de l'enroulement de l'écran, comme illustré sur la figure 2e. En contrôlant la traction exercée sur l'écran par le tube d'enroulement, on modifie la porosité 8 et le taux d'ouverture de l'écran 1 dans une plage de fonctionnement qui peut varier par exemple entre 0% et 40%, ou de préférence entre une limite inférieure comprise entre 0% et 3% et une limite supérieure comprise entre 15 et 20%, pour rester dans la plage correspondant à une protection solaire. Pour remonter l'écran, on doit tout d'abord annuler la traction exercée par le tube d'enroulement 3, avant de libérer la barre de charge 4 en actionnant le verrou 5. Il est à noter que dans les phases d'opacification, on tire partie de l'élasticité du matériau constitutif de l'écran, qui, en retournant élastiquement dans son état non sollicité, referme les porosités 8.

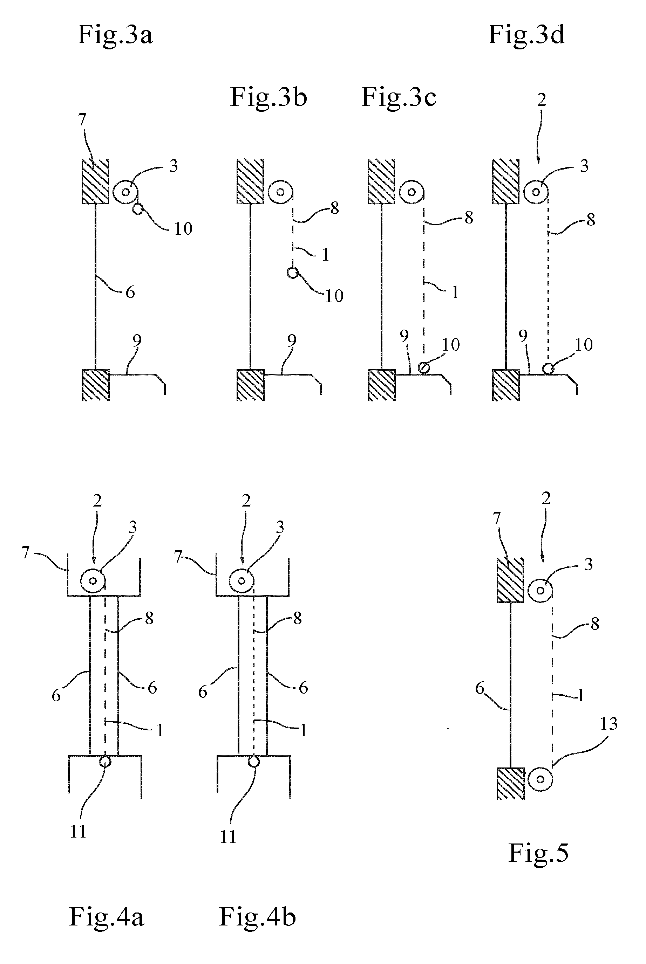

On a illustré sur les figures 3a à 3d un dispositif selon un deuxième mode de réalisation de l'invention, qui diffère du précédent par le fait que la barre de charge présente une masse suffisante pour provoquer une déformation prédéterminée importante de l'écran. Lors de son déploiement, sur les figures 3b et 3c, l'écran offre donc un taux d'ouverture élevé, de préférence supérieur à 10%, par exemple de l'ordre de 15 à 20%. En fin de déploiement, la barre de charge vient reposer sur un support 9 constituant une butée de fin de course. En continuant à entraîner le tube d'enroulement avec le moteur dans le sens du déroulement, on diminue progressivement la traction exercée sur l'écran, jusqu'à obtenir un taux d'ouverture minimal qui est de préférence inférieur à 5%, voire proche de 0%, comme illustré sur la figure 3d.

Ce mode de réalisation offre l'avantage, par rapport à la version précédente, de permettre d'accroître continûment l'assombrissement de la zone à protéger depuis la position enroulée de la figure 3a jusqu'à la position à taux d'ouverture minimal de la figure 3d. Ainsi l'utilisateur obtient-il la quantité de lumière requise pour un usage confortable de la pièce sans devoir passer par une phase sans lumière dans la pièce. Si la quantité de lumière est telle que la remontée de l'écran s'impose, alors la rotation du tube d'enroulement va tout d'abord mettre l'écran sous tension en ouvrant les porosités, jusqu'à atteindre une valeur maximale au moment où la barre de charge commence à se soulever de son support et à remonter avec l'écran. Là encore, la remontée se fera avec une porosité ouverte au maximum et donc un apport de lumière naturelle particulièrement avantageux.

Suivant une variante, on peut combiner les modes de réalisation des figures 2a à 2e et 3a à 3d, en prévoyant une barre de charge massive 10 ayant une masse suffisante pour provoquer une déformation importante de l'écran, mais en prévoyant également que cette barre de charge soit verrouillée dans la position déployée, de sorte qu'il soit possible, dans cette position, soit de diminuer la traction exercée sur l'écran en continuant à dérouler celui-ci, soit d'augmenter la traction au-delà de ce que permet le poids de la barre de charge en enroulant l'écran. Le verrou doit dans ce cas être bidirectionnel, c'est-à-dire empêcher les mouvements de la barre de charge dans le sens du déploiement comme dans celui de l'enroulement. On peut par exemple incorporer au support 9 des figures 3a à 3d un électroaimant venant verrouiller la barre de charge 10. La masse de la barre de charge 10 pourra être choisie de manière à se situer sensiblement au milieu de la plage de déformation souhaitée. On pourra par exemple viser un taux d'ouverture d'environ 5% à 10% obtenu par l'effet de la masse de la barre de charge 10 sur l'écran entièrement déployé juste avant de venir en appui sur le support 9, pour une plage de variation du taux d'ouverture s'étendant de 0% à 15 ou 20%.

Suivant autre une variante, le tube d'enroulement et le moteur peuvent être disposés dans la barre de charge. Ceci sera particulièrement intéressant si l'on souhaite que le poids de la barre de charge contribue à la déformation de l'écran.

Comme on l'a illustré sur les figures 4a et 4b, le dispositif peut être placé entre deux vitrages d'une fenêtre. Dans ce cas, on peut prévoir soit un écran déployable comme dans les modes de réalisation illustrés précédemment, soit de préférence un écran dont l'extrémité libre 11 est fixe, le tube d'enroulement motorisé 3 n'étant destiné qu'à faire varier la traction exercée sur l'écran, mais pas à remonter celui-ci. En effet, dans ce cas l'écran n'est physiquement pas accessible par l'utilisateur et il convient de limiter les risques de dysfonctionnement en limitant la plage de mouvement de l'écran. On choisira dans ce cas de préférence un écran pouvant atteindre sous traction et de manière réversible un taux d'ouverture très élevé, par exemple de l'ordre de 40%, l'écran ayant vocation à remplacer un voilage. La plage de variation du taux d'ouverture pourra être par exemple entre 20% et 40%.

On peut également envisager d'adapter ce mode de réalisation pour les fenêtres qui ne sont pas rectangulaires. Il existe en effet des formes de fenêtres avec une partie haute dont le contour est oblique (pour des fenêtres triangulaires par exemple) ou courbe. On peut dans ce cas mettre en place un écran taillé à la forme et aux dimensions de la fenêtre. L'écran est ensuite posé de façon permanente devant la fenêtre avec cette fois le tube d'enroulement sur la partie basse qui est horizontale et avec une barre de charge positionnée sur la partie haute et qui suit le pourtour haut de l'ouverture. On règle alors le taux d'ouverture de l'écrans en enroulant l'écran par le bas ce qui va régler le taux de luminosité dans la pièce. Afin d'avoir un taux d'ouverture uniforme sous la forme la plus utilisée, on pourra tailler l'écran sous tension avec la contrainte adéquate pour le taux d'ouverture voulu. Ainsi, en position, l'ouverture sera complètement uniforme pour le cas d'emploi le plus commun.

Suivant le mode de réalisation illustré sur la figure 5, on a placé deux tubes d'enroulement 3 et 13 aux extrémités de l'écran. Dans cette configuration, la traction de l'écran se fait par les deux extrémités. Dans la mesure où, comme dans le mode de réalisation précédent, l'écran ne peut être rétracté, on utilisera de préférence un écran dont le taux d'ouverture peut varier de façon importante, par exemple entre 0% et 40%, c'est-à-dire de la perméabilité totale à la transparence quasi entière.

Une autre solution consiste à pouvoir enrouler totalement l'écran sur un premier des deux tubes d'enroulement 3, 13 et à relier l'extrémité libre de l'écran au deuxième tube d'enroulement par des sangles qui permettront de guider et tirer l'écran vers le deuxième tube. Les sangles sont de préférence disposées dans des guidages latéraux qui n'obturent pas l'ouverture et restent invisibles à l'utilisateur. Dans une position non totalement déployée, il suffit de bloquer le premier tube et d'entraîner le deuxième pour faire varier le taux d'ouverture. On peut d'ailleurs faire varier le taux d'ouverture de manière dynamique en contrôlant le différentiel de vitesse entre les deux tubes pendant le déploiement ou la rétractation.

Dans cette configuration de double enroulement, le premier tube peut être disposé au-dessus du deuxième, auquel cas l'écran se déploie de manière conventionnelle du haut vers le bas. Il est également possible de disposer le premier tube au dessous du deuxième, ce qui permet d'inverser le fonctionnement en ayant un développement de l'écran à partir du bas et des sangles fixées à la partie supérieure. Ainsi, il est possible de positionner l'écran à une hauteur intermédiaire en dessous de laquelle l'écran obstrue les rayons du soleil, et au dessus de laquelle la lumière peut pénétrer sans obstacle et offrir suffisamment de lumière dans la pièce pour éviter l'usage d'un éclairage artificiel.

De même, cette solution à double enroulement est compatible avec un usage à mouvement latéral ou à mouvement horizontal comme sur une pergola, ou encore à un mouvement sur une pente quelconque comme sur un toit de véranda.

La rotation du ou des tubes d'enroulement motorisé(s) peut être commandée directement par l'utilisateur intervenant par l'intermédiaire d'une interface utilisateur telle qu'un commutateur à deux ou trois positions.

On peut toutefois adjoindre au dispositif, dans tous les modes de réalisation discutés, un automatisme d'asservissement à des variables extérieures d'environnement, par exemple la luminosité dans la zone externe ou la température dans la zone à protéger. L'objectif est d'asservir finement la tension de l'écran à un scénario prédéterminé, par exemple fonction d'un niveau d'ensoleillement extérieur ou de luminosité intérieure.

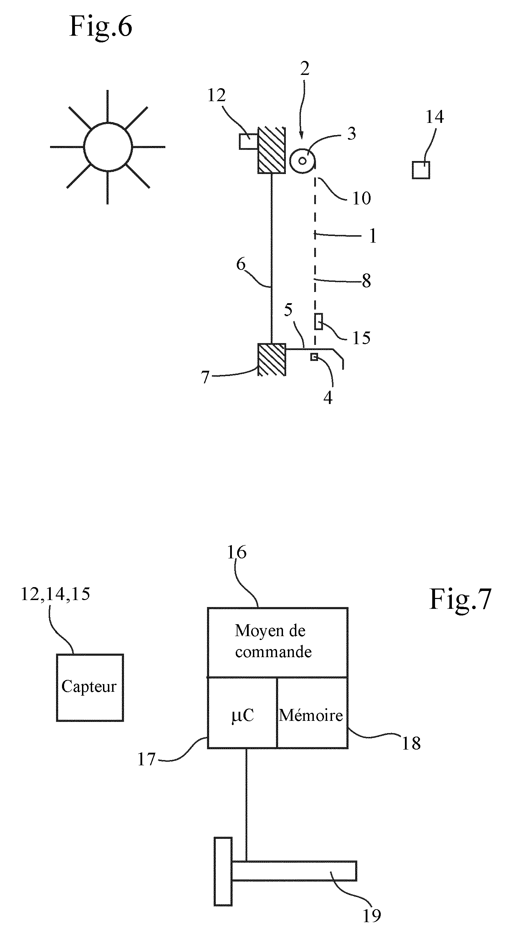

Dans le premier cas, on peut disposer un capteur de luminosité 12 à l'extérieur du bâtiment pour connaître le niveau d'ensoleillement, comme illustré sur la figure 6. Si ce niveau est élevé il faudra mettre l'écran 1 en position et ajuster la porosité 8 jusqu'à obtenir un niveau de luminosité intérieur qui soit confortable pour l'utilisateur.

Pour cela, le capteur d'ensoleillement est relié à un module de commande 16 comprenant un microcontrôleur 17 apte à recevoir l'information du capteur et à l'interpréter. Ce signal peut simplement être un signal tout ou rien lorsque le capteur se déclenche uniquement au passage d'un seuil. L'information d'ensoleillement, qu'elle soit sous la forme d'un seuil ou d'une valeur, pourra être croisée avec une information théorique liée à l'heure de la journée. Par exemple dans le cas d'une heure matinale on peut conclure que les fenêtres d'un bâtiment placées à l'Est subiront un ensoleillement direct alors que les fenêtres à l'Ouest seront à l'ombre du bâtiment et la lumière incidente sera beaucoup moins gênante pour les utilisateurs. Cette information d'orientation et l'heure courante sont des informations faciles à intégrer dans le microcontrôleur 17 et sa mémoire associée 18.

Un capteur de luminosité intérieur 14 peut aussi être utilisé, soit seul, soit en combinaison avec le capteur d'ensoleillement 12. Le capteur 14 est placé dans la pièce à n'importe quel endroit. En effet, l'ouverture des porosités 8 de l'écran 1 étant uniforme sur la hauteur de l'écran, la répartition de la lumière passant à travers l'écran est régulière. En particulier, le gradient de luminosité dépend essentiellement de la distance à la fenêtre. Par conséquent, connaissant la distance séparant le capteur 14 de la fenêtre 6 il est possible d'étalonner le dispositif à ce que l'on souhaite obtenir.

Ce type de capteur de luminosité intérieur 14 peut également convenir pour gérer la lumière artificielle. Ainsi l'automatisme va pouvoir gérer la lumière à l'intérieur de la pièce par deux moyens, la protection solaire et la lumière artificielle.

Il est également possible d'utiliser un capteur de luminosité 15 embarqué sur l'écran 1. Celui-ci pourra être positionné sur l'écran dans une zone en permanence devant la vitre 6 lorsque l'écran est déployé et du côté opposé à la vitre 6 par rapport à l'écran. Le capteur de luminosité 15 peut être orienté de manière à détecter la luminosité dans la zone à protéger. Il se comporte dans ce cas comme le capteur 14 précédemment décrit. Alternativement, le capteur 15 peut être orienté de manière à détecter localement la luminosité traversant l'écran. Dans cette position, le capteur de luminosité 15 reçoit un rayonnement fonction du niveau d'ouverture des porosités de l'écran. Ainsi est-il possible de connaître avec précision le taux d'ouverture. Le cas échéant, ce capteur 15 peut également remplacer le capteur d'ensoleillement extérieur 12. La communication entre ce capteur et le moyen de commande 16 peut se faire soit par une liaison radio, ce qui permet une entière liberté de positionnement, soit par une liaison filaire qui peut être superposée à l'écran ou directement tissée avec le reste de l'écran (un des fils utilisé peut être conducteur de l'électricité). On peut de la même manière envisager un capteur extensométrique fixé à l'écran délivrant un signal représentatif de l'allongement de l'écran, donc de la porosité 8 et du taux d'ouverture correspondant.

Quoiqu'il en soit le microcontrôleur 17 interprète le signal reçu pour déterminer quel taux d'ouverture des porosités 8 de l'écran devra être appliqué pour une fenêtre donnée.

Lorsque le taux d'ouverture requis est connu, un ordre est envoyé au moteur 19, ou aux moteurs, par le microcontrôleur 17. Cet ordre se traduit par la mise en route du moteur.

Le problème qui se pose alors est de savoir quand arrêter le moteur 19 pour que la position de l'écran 1 soit adéquate. Pour ce faire le moteur peut disposer par exemple soit d'un système de comptage de position, soit d'un système de mesure du couple au niveau de l'embout d'entraînement du moteur.

En effet, l'asservissement peut se faire en position ou en couple.

Dans le cas d'un asservissement en position, il s'agit de connaître le nombre de tours effectué par le moteur 19 partant d'une position donnée. Le comptage des tours effectués ou des portions de tour effectuées permet de savoir quel est le déplacement effectué par l'écran 1 et donc de connaître d'abord la position de la barre de charge 4 dans le cas de la descente ou la montée de l'écran, puis l'allongement sa tension et donc son taux d'ouverture dès que la barre de charge est en position. En effet, il existe une relation directe entre le déplacement de l'écran 1 et sa tension lorsqu'il est en position devant l'ouverture à obturer 6. Les dispositifs de comptage sont des dispositifs connus dans les actionneurs de protection solaire.

Dans le cas d'un asservissement en couple, il s'agit de mesurer le couple exercé sur l'axe de sortie du moteur 19 pour connaître la force de traction exercée sur l'écran 1. Cette tension étant directement liée au taux d'ouverture des porosités 8 de l'écran 1, il est possible d'asservir ce taux d'ouverture au taux d'ensoleillement mesuré. Pour les dispositifs où l'écran 1 doit d'abord se positionner avant qu'il soit possible de gérer l'ouverture ou la fermeture des porosités 8, on peut détecter une rupture de pente sur la courbe des couples en fonction du temps. En effet, lorsque l'écran 1 descend, son poids tire sur le tube d'enroulement 3 et par voie de conséquence sur l'axe du moteur 19. Lorsque la barre de charge 4 atteint son point d'appui, l'effort exercé par l'écran diminue et un relâchement de la contrainte peut être mesuré au niveau de l'axe moteur 19.

Dans l'hypothèse où l'écran 1 descend puis remonte pour être bloqué sur des dispositifs de blocage 5 (mode de réalisation des figures 1 a à 1 e), l'asservissement en position semble préférable car il permet de connaître la position de l'écran pour venir l'accrocher dans les dispositifs de verrouillage 5. On peut néanmoins envisager un cumul des éléments : une mesure de la distance parcourue pour identifier la position de la barre de charge avant de remonter dans le système de blocage, et une mesure de couple pour gérer l'asservissement en tension de l'écran et donc le taux d'ouverture de la porosité.

Dans le cas où le dispositif 2 n'est pas définitivement en place avec ces extrémités en position, mais qu'au contraire il faut mettre l'écran 1 en mouvement pour qu'il se mette en place, on prévoit une procédure d'installation. Cette procédure consiste à déterminer quelles sont les fins de course dans un sens comme dans l'autre. Par exemple on détermine quelle est la position extrême haute pour éviter d'enrouler l'écran 1 dans son entier, et/ou la position extrême basse pour arrêter le déroulement de l'écran 1 au bon endroit. Cette opération n'est en principe faisable qu'une fois le dispositif 2 en place car il dépend de l'endroit d'installation. Certaines de ces limites peuvent être déterminées automatiquement. Par exemple, dans le cas de la barre de charge massive 10, les efforts d'entraînement du moteur 19 à la descente varient lorsque la barre de charge 10 atteint son point d'appui 9. Ainsi une variation forte sur un paramètre du moteur 19 peut être mesurée qui déterminera la limite de fin de course basse. Ce paramètre peut être le courant d'alimentation du moteur 19, ou une mesure de couple si le moteur 19 dispose d'un capteur.

Un problème peut exister au niveau de la portion d'écran 1 située sur le tube d'enroulement 3 lors du déroulement sous charge de l'écran 1. L'écran 1 est par définition élastique. Lorsqu'il est positionné sur le tube, il peut être mis sous contrainte et donc il risque de glisser en s'enroulant sur le tube. Ce phénomène peut être problématique car il perturbe la mesure du déplacement de l'écran 1. En effet, il est nécessaire d'associer ce déplacement à l'ouverture ou à la fermeture des porosités 8 de l'écran 1. Ce mouvement complémentaire trompe l'asservissement. Ce phénomène ne sera pas gênant lorsqu'il n'y a pas d'asservissement et que l'utilisateur commande son store 2 directement, ou qu'il y a un asservissement mais avec un capteur intérieur capable de déterminer si la luminosité ambiante est adéquate.

Une première méthode pour compenser ce glissement est de le connaître et de le considérer dans le calcul d'ouverture de la porosité 8 de l'écran 1. Ainsi le déplacement mesuré au niveau du tube intègrera également le déplacement de la portion d'écran 1 pour au maximum le pourcentage d'extension de l'écran 1 au total. Par exemple, si l'extension est de 10% pour un tissu 1 d'une hauteur totale de 3 mètres, la quantité d'écran 1 enroulé est de 30 centimètres et le passage de lumière ne pourra se faire que sur 2,70m d'écran 1 en équivalent non tendu. Par rapport à la quantité de passages lumineux attendus, il manquera 10%. L'ouverture équivalente ne sera donc pas de 10% mais de 9%. Une tension supplémentaire d'environ 1% devra donc être effectuée. Ce calcul reste simplifié car il ne tient pas compte du coefficient de frottement de l'écran 1 sur le tube qui tendra à diminuer l'erreur.

Dans ce cas, les caractéristiques de l'écran 1 devront être rentrées dans le moyen de contrôle préalablement pour être en mesure de faire les corrections.

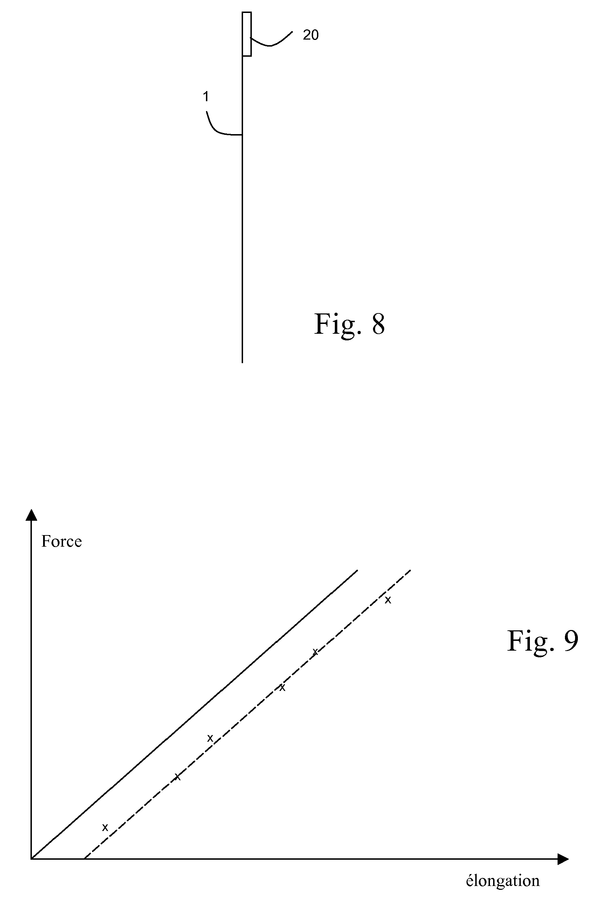

Une autre solution à ce problème, illustrée sur la figure 8, consiste à ajouter sur l'extrémité de l'écran 1 une surtoile 20, par exemple en polyester, qui n'est pas extensible. Cette surtoile 20 est fixée sur l'extrémité supérieure de l'écran 1. Deux bandes de fixation peuvent être utilisées : la première entre l'extrémité supérieure de l'écran 1 et une bordure de la surtoile 20, la seconde entre l'autre bordure parallèle à la première de la surtoile 20 et l'écran. La première fixation se fait en même temps que la fixation de l'écran 1 au jonc qui est classiquement intégré au tube d'enroulement 3. Ces fixations peuvent être faites par exemple par couture ou par collage. Il est également possible de coller intégralement la surtoile 20 sur l'extrémité supérieure de l'écran 1.

La longueur de cette surtoile 20 correspond à la longueur d'extension possible de l'écran 1 entre le relâchement total et la tension maximale. Pour une toile de trois mètres de hauteur par exemple, ce peut être de l'ordre de 45 centimètres. En effet, pour un usage classique l'écran 1 sera tendu entre 0% et 15%.

Le fonctionnement avec la surtoile 20 sera le suivant : lorsque le store 2 est en place avec l'écran 1 non tendu, la totalité de l'écran 1 est sortie du tube d'enroulement 3 et apparente. Lorsque l'utilisateur souhaite ouvrir les porosités 8, l'écran 1 est tendu par l'intermédiaire de l'enroulement de l'écran 1 sur le tube. Or, sans surtoile 20, il y a un risque que lors de cette opération l'écran 1 glisse sur le tube d'enroulement 3 en se tendant. Avec la surtoile 20 qui n'est pas extensible, l'écran 1 ne peut pas se tendre à cet endroit et il n'y a plus de glissement.

En reprenant l'exemple précédent, les 10% de déplacement, soit 30cm se répartissent sur l'écran 1 restant et donc sur une partie non enroulée de l'écran 1. L'ouverture effective est réellement celle attendue.

Avec un même effet technique il est envisageable de prolonger l'écran 1 extensible par un morceau qui ne l'est pas, de sorte que la partie qui s'enroule lors de la traction du store 2 ne soit pas extensible.

Un autre problème peut être rencontré au cours de la vie du store 2 : le vieillissement des matériaux. Ce vieillissement peut se traduire par une variation de la raideur de l'écran 1 de sorte que pour un même effort exercé sur l'écran 1, le taux d'ouverture des porosités 8 sera différent si l'écran 1 est neuf, si les fibres de l'écran 1 se sont définitivement mises en place après une période initiale d'utilisation, ou si l'écran 1 est utilisé depuis plusieurs années. Ce vieillissement peut aussi se mesurer par une déformation résiduelle de l'écran 1, une élongation permanente correspondant à une augmentation de la valeur minimale du taux d'ouverture.

Dans le cas où le moteur 19 est équipé à la fois d'une mesure de couple et d'une mesure de déplacement par le comptage des tours effectués par le tube d'enroulement 3, il est possible d'identifier ce vieillissement et d'appliquer des facteurs correctifs.

Par exemple une mesure régulière des valeurs de déplacement et de couple permettra de déterminer en temps réel la raideur de l'écran 1, comme illustré sur la figure 9. En effet ces deux grandeurs sont proportionnelles et dépendent directement de la raideur de l'écran 1. Si la raideur diminue avec le temps, il convient d'appliquer un facteur de correction à un asservissement en couple car pour un même effort, le déplacement des fibres sera plus important et donc le taux d'ouverture sera plus important. Dans le cas d'un asservissement en position, cette dérive n'aura pas d'impact car le taux d'ouverture restera le même pour un déplacement donné.

Dans le cas où il y a une déformation permanente de l'écran 1, celle-ci peut être mesurée dans les premiers cas d'emploi où le store 2 doit d'abord être descendu avant de pouvoir opérer une variation du taux d'ouverture de la toile. Un moyen pour le mesurer si l'on dispose d'une mesure de couple et d'une mesure de déplacement est d'enregistrer une série de valeurs couple / déplacement et de calculer la pente de la courbe reliant ces points. A couple nul, le déplacement calculé à partir de cette pente doit être égal à celui d'origine. Un décalage de valeur (illustré sur la figure 9) permet de déterminer de combien l'écran 1 s'est déformé.

Cette valeur est également déterminante pour le positionnement de l'écran en fin de course d'enroulement : si la toile est déformée, l'écran 1 risque de dépasser du tube d'enroulement 3 d'une quantité égale à la déformation. La mesure de cette déformation permet donc de recaler au fur et à mesure du temps la position extrême haute.

On peut prévoir que le dispositif de contrôle dispose de divers algorithmes d'apprentissage mis en oeuvre lors de l'installation sur site.

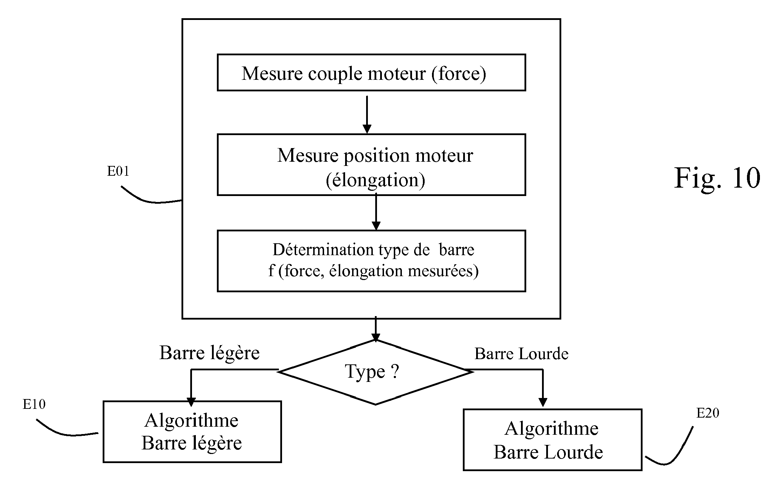

En particulier, un algorithme permet à l'intelligence embarquée dans le dispositif de détecter si le montage est du type à barre de charge légère 4 ou massive 10. Cet algorithme, illustré sur la figure 10, fait appel à des mesures de couple moteur et d'angle de rotation du moteur, pour reconstituer la courbe de la figure 9. Le couple moteur nécessaire pour dérouler l'écran étant moins élevé dans le cas d'une barre massive que dans le cas d'une barre légère, et le couple moteur nécessaire pour enrouler l'écran étant au contraire plus élevé dans le cas d'une barre massive que dans le cas d'une barre légère, l'observation des courbes obtenues lors du déroulement et/ou de l'enroulement permet de déduire le type de barre, voire la masse de la barre (étape E01). Il s'ensuit un choix d'algorithme de pilotage spécifique au cas de la barre légère (étape E10) ou à celui de la barre massive (étape E20).

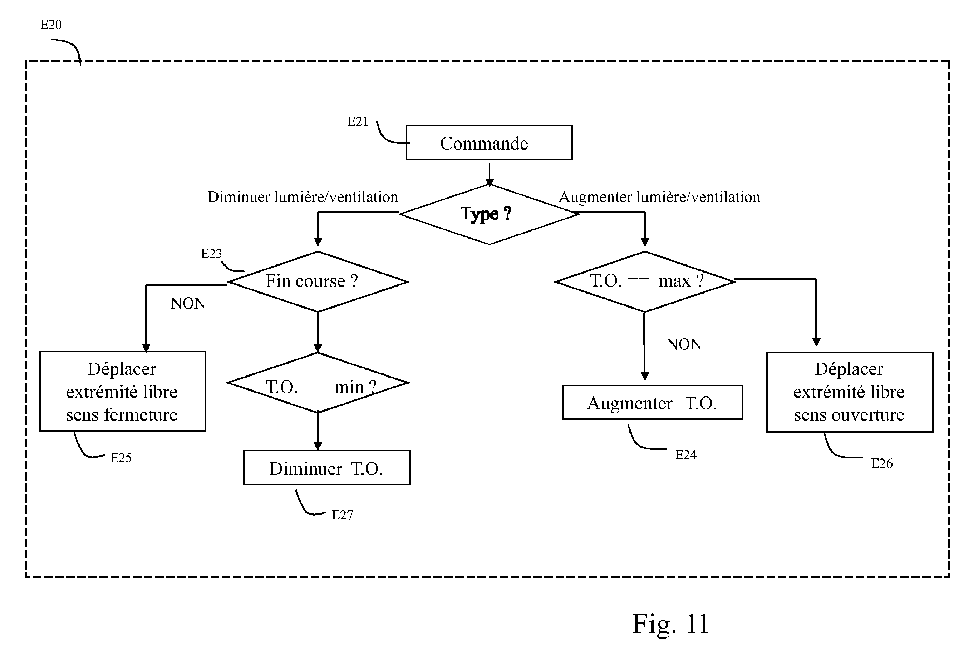

On a reconstitué sur la figure 11 l'algorithme E20 utilisé pour piloter la barre massive 10 du mode de réalisation des figures 3a à 3d, en fonction d'une commande d'augmentation ou de diminution de la lumière (et/ou de la circulation d'air), reçue à l'étape E21. Cette commande peut être une commande manuelle donnée par l'utilisateur sur une interface de commande, ou une commande en provenance de l'automatisme 16 pour répondre par exemple à une modification de la luminosité détectée par des capteurs 12, 14 ou 15.

Si la commande est une commande d'augmentation de la luminosité, le microprocesseur 17 détermine dans un premier temps si le taux d'ouverture maximal a été atteint. Dans l'affirmative, le microprocesseur commande le moteur 19 de préférence en vitesse pour enrouler l'écran 1 assez rapidement, ce qui a pour effet de faire remonter la barre de charge 10 (Etape E26). Dans le cas contraire, le microprocesseur commande le moteur 19 également dans le sens de l'enroulement de l'écran mais en pilotant le moteur en couple à très faible vitesse pour une précision maximale. La barre de charge 10 reste en place, alors que l'écran se tend et que le taux d'ouverture augmente progressivement (Etape E24).

Si la commande est une commande de diminution de la luminosité, le microprocesseur 17 détermine dans un premier temps si la position de fin de course de la barre de charge 10 sur le support 9 a été atteinte, comme évoqué précédemment (étape E23). Dans l'affirmative, le microprocesseur détermine si le taux d'ouverture minimal de l'écran a ou non été atteint, et dans l'hypothèse où il ne l'a pas encore été, actionne le moteur 19 avec une consigne de couple pour dérouler davantage l'écran, ce qui diminue l'effort de traction et referme les pores de l'écran (étape E27). Si la position de fin de course de fermeture n'a pas encore été atteinte, si donc on se trouve dans l'état de la figure 3b, le microprocesseur 17 peut piloter la rotation du moteur 19 en vitesse pour dérouler rapidement l'écran et descendre davantage la barre de charge 10 (Etape E25).

L'automate de contrôle du moteur peut être ou non embarqué sur celui-ci.

Toutes les solutions ne faisant pas appel à la masse de la barre de charge pour le déploiement (figures 1 a à 1 e) ou la traction de l'écran (figures 3a à 3d) peuvent utilisées indifféremment avec un tube d'enroulement horizontal ou vertical, pour étendre l'écran horizontalement ou verticalement, suivant un mouvement vertical, latéral, ou horizontal comme sur une pergola, ou bien encore selon une pente quelconque comme sur le toit d'une véranda.

Les modes de réalisation illustrés ci-dessus peuvent être utilisés pour que l'écran serve aussi de moustiquaire, ou bien encore de moyen de régulation de la quantité d'air entrant dans la pièce. Dans ces cas la fenêtre doit pouvoir être ouverte indépendamment de l'écran. Pour la régulation de l'entrée d'air, l'écran peut être utilisé en complément d'un moyen de ventilation traditionnel. Il peut être également envisagé comme élément de sécurité pour éviter la pénétration dans la zone à protéger de fumée en provenance de la zone externe.

## Revendications

1. Procédé de contrôle de la perméabilité à la lumière ou à l'air d'un écran élastique extensible (1) disposé en regard d'une ouverture (6) dans une paroi (7) d'un bâtiment entre une zone à protéger et une zone externe, l'écran (1) présentant une perméabilité variant avec un effort de traction exercé sur l'écran, **caractérisé en ce qu'**un mécanisme motorisé (3) d'entraînement d'un tube d'enroulement (3) de l'écran ajuste l'effort de traction sur l'écran (1) en réponse à un signal de consigne.

2. Procédé de contrôle selon la revendication 1, **caractérisé en ce que** le signal de consigne est fonction d'un ou plusieurs signaux en provenance d'un ou plusieurs capteurs (12, 14, 15).

3. Procédé de contrôle selon la revendication 2, **caractérisé en ce que** le ou les capteurs comprennent au moins un capteur (14) détectant l'intensité lumineuse dans la zone à protéger et/ou au moins un capteur (12) détectant l'intensité lumineuse dans la zone externe.

4. Procédé de contrôle selon la revendication 2 ou la revendication 3, **caractérisé en ce que** le ou les capteurs comprennent au moins un capteur (15) accolé à l'écran (1) dans la zone à protéger et orienté vers la zone externe de manière à détecter la lumière traversant l'écran.

5. Procédé de contrôle selon l'une quelconque des revendications 2 à 4, **caractérisé en ce que** le signal de consigne est fonction d'un ou plusieurs signaux en provenance d'un ou plusieurs capteurs thermiques disposés dans la zone à protéger et/ou la zone externe.

6. Procédé de contrôle selon l'une quelconque des revendications 2 à 5, **caractérisé en ce que** le signal de consigne est un signal proportionnel à un effort de traction à exercer sur l'écran.

7. Procédé de contrôle selon l'une quelconque des revendications 2 à 5, **caractérisé en ce que** le signal de consigne est un signal proportionnel à une déformation à exercer sur l'écran.

8. Procédé de contrôle selon l'une quelconque des revendications 2 à 5, **caractérisé en ce que** le signal de consigne est un signal proportionnel à une luminosité cible dans la zone à protéger.

9. Procédé de contrôle selon l'une quelconque des revendications précédentes, **caractérisé en ce que** le tube d'enroulement (3) entraîné par le mécanisme d'entraînement permet d'enrouler et dérouler l'écran entre une position rétractée enroulée et une position déployée, et **en ce que** le procédé comporte une étape préalable de déploiement motorisé de l'écran (1) depuis la position rétractée jusqu'à la position déployée.

10. Procédé de contrôle selon la revendication 9 **caractérisé en ce que** durant l'étape préalable de déploiement, l'écran présente une déformation prédéterminée.

11. Procédé de contrôle selon la revendication 10 **caractérisé en ce que** durant l'étape préalable de déploiement, l'écran présente une déformation maximale ou une déformation prédéterminée suffisante pour augmenter significativement sa perméabilité par rapport à la valeur minimale sans déformation

12. Procédé de contrôle selon la revendication 10 **caractérisé en ce que** durant l'étape préalable de déploiement, l'écran présente une déformation minimale.

13. Dispositif de contrôle de la perméabilité au travers d'une ouverture (6) dans une paroi (7) d'un bâtiment entre une zone à protéger et une zone externe, comportant écran élastique extensible (1) présentant une perméabilité variant avec un effort de traction exercé sur l'écran, **caractérisé en ce qu'**il comporte en outre un mécanisme motorisé (3) d'entraînement d'un tube d'enroulement (3) de l'écran pour ajuster un effort de traction sur l'écran en réponse à un signal de consigne et modifier ainsi la perméabilité de l'écran.

14. Dispositif de contrôle selon la revendication 13, **caractérisé en ce qu'**il comporte un automatisme (16) de commande du mécanisme motorisé (3) pour générer le signal de consigne.

15. Dispositif selon la revendication 14, **caractérisé en ce qu'**il comporte en outre au moins un capteur de luminosité (12, 14, 15) relié à l'automatisme (16).

16. Dispositif selon la revendication 15, **caractérisé en ce que** le capteur de luminosité (15) est accolé à l'écran (1) dans la zone à protéger et orienté vers la zone externe de manière à détecter la lumière traversant l'écran.

17. Dispositif de contrôle selon l'une quelconque des revendications 13 à 16, **caractérisé en ce que** le tube d'enroulement (3) est apte à enrouler et dérouler l'écran entre une position enroulée et une position déployée.

18. Dispositif selon la revendication 17, **caractérisé en ce qu'**il comporte en outre une barre de charge (4, 10) disposée à une extrémité libre de l'écran.

19. Dispositif de contrôle selon la revendication 18, **caractérisé en ce que** la barre de charge (10) présente une masse telle que, suspendue à l'extrémité libre de l'écran (1), elle provoque un effort de traction prédéterminé.

20. Dispositif de contrôle selon la revendication 19, **caractérisé en ce que** la barre de charge (10) présente une masse telle que lors du déroulement de l'écran, l'écran présente une déformation maximale ou une déformation prédéterminée suffisante pour augmenter significativement sa perméabilité par rapport à la valeur minimale sans déformation.

21. Dispositif de contrôle selon la revendication 19 ou la revendication 20, **caractérisé en ce que** le dispositif comporte en outre une butée de support (9) de la barre de charge en position déployée de l'écran.

22. Dispositif de contrôle selon l'une quelconque des revendications 18 à 20, **caractérisé en ce que** le dispositif présente un verrou (5) pour verrouiller la barre de charge (4) en position déployée.

23. Dispositif de contrôle selon l'une quelconque des revendications 18 à 22, **caractérisé en ce que** le tube d'enroulement (3) est disposé dans la barre de charge (4).

24. Dispositif de contrôle selon l'une quelconque des revendications 13 à 16, **caractérisé en ce qu'**il comporte deux tubes d'enroulement (3, 13) reliés à deux extrémités opposées de l'écran.

25. Dispositif de contrôle selon la revendication 24, **caractérisé en ce qu'**il comporte en outre au moins une sangle de liaison de l'un des deux tubes d'enroulement à l'une des desdites extrémités de l'écran.

## Patentansprüche

1. Steuerungsverfahren der Licht- oder Luftdurchlässigkeit eines erweiterbaren elastischen Vorhangs (1), der gegenüber einer Öffnung (6) in einer Wand (7) eines Gebäudes zwischen einer zu schützenden Zone und einer äußeren Zone angeordnet ist, wobei der Vorhang (1) eine Durchlässigkeit aufweist, die mit einer auf den Vorhang ausgeübten Zugkraft schwankt, **dadurch gekennzeichnet, dass** ein motorisierter Antriebsmechanismus (3) eines Rollrohrs (3) des Vorhangs die Zugkraft auf den Vorhang (1) in Beantwortung eines Referenzsignals regelt.

2. Steuerungsverfahren nach Anspruch 1, **dadurch gekennzeichnet, dass** das Referenzsignal von einem oder mehreren von einem oder mehreren Sensoren (12, 14, 15) kommenden Signalen abhängt.

3. Steuerungsverfahren nach Anspruch 2, **dadurch gekennzeichnet, dass** der oder die Sensoren mindestens einen Sensor (14) umfassen, der die Lichtstärke in der zu schützenden Zone erfasst und/oder mindestens einen Sensor (12), der die Lichtstärke in der äußeren Zone erfasst.

4. Steuerungsverfahren nach Anspruch 2 oder Anspruch 3, **dadurch gekennzeichnet, dass** der oder die Sensoren mindestens einen in der zu schützenden Zone am Vorhang (1) angebrachten, derart zur äußeren Zone gerichteten Sensor (15) umfassen, um das den Vorhang durchquerende Licht zu erfassen.

5. Steuerungsverfahren nach einem der Ansprüche 2 bis 4, **dadurch gekennzeichnet, dass** das Referenzsignal von einem oder mehreren von einem oder mehreren thermischen, in der zu schützenden Zone und/oder der äußeren Zone angeordneten Sensoren kommenden Signalen abhängt.

6. Steuerungsverfahren nach einem der Ansprüche 2 bis 5, **dadurch gekennzeichnet, dass** das Referenzsignal ein zu einer auf den Vorhang auszuübenden Zugkraft proportionales Signal ist.

7. Steuerungsverfahren nach einem der Ansprüche 2 bis 5, **dadurch gekennzeichnet, dass** das Referenzsignal ein zu einer auf den Vorhang auszuübenden Verformung proportionales Signal ist.

8. Steuerungsverfahren nach einem der Ansprüche 2 bis 5, **dadurch gekennzeichnet, dass** das Referenzsignal ein zu einer Ziellichtstärke in der zu schützenden Zone proportionales Signal ist.

9. Steuerungsverfahren nach einem der vorangehenden Ansprüche, **dadurch gekennzeichnet, dass** das von dem Antriebsmechanismus angetriebene Rollrohr (3) erlaubt, den Vorhang (1) zwischen einer eingezogenen aufgerollten und einer entfalteten Position aufzurollen und abzurollen und dass das Verfahren einen vorherigen motorisierten Entfaltungsschritt des Vorhangs (1) von der eingezogenen Position in die entfaltete Position aufweist.

10. Steuerungsverfahren nach Anspruch 9, **dadurch gekennzeichnet, dass** der Vorhang während des vorherigen Entfaltungsschritts eine vorbestimmte Verformung aufweist.

11. Steuerungsverfahren nach Anspruch 10, **dadurch gekennzeichnet, dass** der Vorhang während des vorherigen Entfaltungsschritts eine maximale Verformung oder eine vorbestimmte Verformung aufweist, die ausreichend ist, um seine Durchlässigkeit im Verhältnis zum minimalen Wert ohne Verformung signifikant zu erhöhen.

12. Steuerungsverfahren nach Anspruch 10, **dadurch gekennzeichnet, dass** der Vorhang während des vorherigen Entfaltungsschritts eine minimale Verformung aufweist.

13. Steuervorrichtung der Durchlässigkeit durch eine Öffnung (6) in einer Wand (7) eines Gebäudes zwischen einer zu schützenden Zone und einer äußeren Zone, die einen erweiterbaren elastischen Vorhang (1) aufweist, der eine Durchlässigkeit aufweist, die mit einer auf den Vorhang ausgeübten Zugkraft schwankt, **dadurch gekennzeichnet, dass** sie ferner einen motorisierten Antriebsmechanismus (3) eines Rollrohrs (3) des Vorhangs aufweist, um eine Zugkraft auf den Vorhang in Beantwortung eines Referenzsignals zu regeln und damit die Durchlässigkeit des Vorhangs zu verändern.

14. Steuervorrichtung nach Anspruch 13, **dadurch gekennzeichnet, dass** sie eine Steuerautomatik (16) des motorisierten Mechanismus (3) aufweist, um das Referenzsignal zu erzeugen.

15. Vorrichtung nach Anspruch 14, **dadurch gekennzeichnet, dass** sie ferner mindestens einen mit der Automatik (16) verbundenen Lichtstärkesensor (12, 14, 15) aufweist.

16. Vorrichtung nach Anspruch 15, **dadurch gekennzeichnet, dass** der Lichtstärkesensor (15) am Vorhang (1) in der zu schützenden Zone angebracht ist und derart zur äußeren Zone gerichtet ist, um das den Vorhang durchquerende Licht zu erfassen.

17. Steuervorrichtung nach einem der Ansprüche 13 bis 16, **dadurch gekennzeichnet, dass** das Rollrohr (3) imstande ist, den Vorhang zwischen einer aufgerollten und einer entfalteten Position aufzurollen und abzurollen.

18. Vorrichtung nach Anspruch 17, **dadurch gekennzeichnet, dass** sie ferner ein Ausfallprofil (4, 10) aufweist, das an einem freien Ende des Vorhangs angeordnet ist.

19. Steuervorrichtung nach Anspruch 18, **dadurch gekennzeichnet, dass** das Ausfallprofil (10) eine Masse aufweist, die derart ist, dass es, wenn am freien Ende des Vorhangs (1) angehängt, eine vorbestimmte Zugkraft ausübt.

20. Steuervorrichtung nach Anspruch 19, **dadurch gekennzeichnet, dass** das Ausfallprofil (10) eine Masse aufweist, die derart ist, dass beim Abrollen des Vorhangs der Vorhang eine maximale Verformung oder eine vorbestimmte Verformung aufweist, die ausreichend ist, um seine Durchlässigkeit im Verhältnis zum minimalen Wert ohne Verformung signifikant zu erhöhen.

21. Steuervorrichtung nach Anspruch 19 oder Anspruch 20, **dadurch gekennzeichnet, dass** die Vorrichtung in entfalteter Position des Vorhangs ferner einen Stützanschlag (9) des Ausfallprofils aufweist.

22. Steuervorrichtung nach einem der Ansprüche 18 bis 20, **dadurch gekennzeichnet, dass** die Vorrichtung einen Riegel (5) aufweist, um das Ausfallprofil (4) in entfalteter Position zu verriegeln.

23. Steuervorrichtung nach einem der Ansprüche 18 bis 22, **dadurch gekennzeichnet, dass** das Rollrohr (3) im Ausfallprofil (4) angeordnet ist.

24. Steuervorrichtung nach einem der Ansprüche 13 bis 16, **dadurch gekennzeichnet, dass** sie zwei Rollrohre (3, 13) aufweist, die an zwei gegenüberliegenden Enden des Vorhangs verbunden sind.

25. Steuervorrichtung nach Anspruch 24, **dadurch gekennzeichnet, dass** sie ferner mindestens einen Verbindungsgurt von einem der zwei Rollrohre mit einem der Enden des Vorhangs aufweist.

## Claims

1. A method for controlling the light and/or air permeability of an extensible elastic screen (1) arranged across from an opening (6) in a wall (7) of a building between a zone to be protected and an outer zone, the screen (1) having a permeability varying with a traction force exerted on the screen, **characterized in that** a motorized drive mechanism (3) of a winding tube (3) for winding the screen adjusts the traction force on the screen (1) in response to a setpoint signal.

2. The control method according to claim 1, **characterized in that** the setpoint signal depends on one or more signals coming from one or more sensors (12, 14, 15).

3. The control method according to claim 2, **characterized in that** the one or more sensors comprise at least one sensor (14) detecting the light intensity in the zone to be protected and/or at least one sensor (12) detecting the light intensity in the outer zone.

4. The control method according to claim 2 or 3, **characterized in that** the one or more sensors comprise at least one sensor (15) alongside the screen (1) in the zone to be protected and oriented toward the outer zone so as to detect the light passing through the screen.

5. The control method according to any one of claims 2 to 4, **characterized in that** the setpoint signal depends on one or more signals coming from one or more thermal sensors positioned in the zone to be protected and/or the outer zone.

6. The control method according to any one of claims 2 to 5, **characterized in that** the setpoint signal is a signal proportional to a traction force to be exerted on the screen.

7. The control method according to any one of claims 2 to 5, **characterized in that** the setpoint signal is a signal proportional to a deformation to be exerted on the screen.

8. The control method according to any one of claims 2 to 5, **characterized in that** the setpoint signal is a signal proportional to a target brightness in the zone to be protected.

9. The control method according to any one of the preceding claims, **characterized in that** the winding tube (3) driven by the drive mechanism enables to wind and unwind the screen between a retracted wound position and an deployed unwound position and **in that** the method comprises a prior step of motorized deployment of the screen (1) from the retracted position to the deployed position.

10. The control method according to claim 9, **characterized in that** during the prior deployment step, the screen has a predetermined deformation.

11. The control method according to claim 10, **characterized in that** during the prior deployment step, the screen has a maximum deformation or a predetermined deformation sufficient to significantly increase its permeability compared to the minimum value without deformation.

12. The control method according to claim 10, **characterized in that** during the prior deployment step, the screen has a minimum deformation.

13. A device for controlling permeability through an opening (6) in a wall (7) of a building between a zone to be protected and an outer zone, comprising an extensible screen (1) having a permeability varying with a traction force exerted on the screen, **characterized in that** it further comprises a motorized drive mechanism (3) to adjust a traction force on the screen in response to a setpoint signal and thereby modify the permeability of the screen.

14. The control device according to claim 13, **characterized in that** it comprises an automated control (16) for the motorized mechanism (3) to generate the setpoint signal.

15. The device according to claim 14, **characterized in that** it further comprises at least one brightness sensor (12, 14, 15) connected to the automation mechanism (16).

16. The device according to claim 15, **characterized in that** the brightness sensor (15) is alongside the screen (1) in the zone to be protected and oriented toward the outer zone so as to detect the light passing through the screen.

17. The control device according to any one of claims 13 to 16, **characterized in that** the winding tube (3) is able to wind and unwind the screen between a wound position and a deployed position.

18. The device according to claim 17, **characterized in that** it further comprises a load bar (4, 10) positioned at a free end of the screen.

19. The control device according to claim 18, **characterized in that** the load bar (10) has a mass such that, suspended at the free end of the screen (1), it causes a predetermined traction force.

20. The control device according to claim 19, **characterized in that** the load bar (10) has a mass such that, when the screen is being unwound the screen has a maximum deformation or a predetermined deformation sufficient to significantly increase its permeability compared to the minimum value without deformation.

21. The control device according to claim 19 or claim 20, **characterized in that** the device further comprises a support stop (9) for stopping the load bar in the deployed position of the screen.

22. The control device according to any one of claims 18 to 20, **characterized in that** the device has a lock (5) to lock the load bar (4) in the deployed position.

23. The control device according to any one of claims 18 to 22, **characterized in that** the winding tube (3) is positioned in the load bar (4).

24. The control device according to any one of claims 13 to 16, **characterized in that** it comprises two winding tubes (3, 13) connected to two opposite ends of the screen.

25. The control device according to claim 24, **characterized in that** it further comprises at least one connecting strap to connect one of the two winding tubes to one of said ends of the screen.
